# EUROPÄISCHE PATENTSCHRIFT

(11) **EP 0 246 667 B1**
(45) Veröffentlichungstag und Bekanntmachung des Hinweises auf die Patenterteilung: **20.10.1993**
(21) Anmeldenummer: 87107603.0
(22) Anmeldetag: 25.05.1987
(51) Int. Cl.: A23P 1/08, A23P 1/12

(54) **Verfahren und Vorrichtung zum Herstellen gefüllter Massen**
Process and apparatus for preparing stuffed products
Procédé et installation de préparation de produits fourrés

(30) Priorität: 23.05.1986 DE 3617413
(43) Veröffentlichungstag der Anmeldung: 25.11.1987
(73) Patentinhaber: VEMAG Maschinenbau GmbH, D-27266 Verden (Aller) (DE)
(72) Erfinder: Ristau, Reinhard-K., D-2810 Verden (Aller) (DE); Walker, Harald, D-2810 Verden (DE)
(74) Vertreter: Eisenführ, Speiser & Partner

(56) Entgegenhaltungen:
- EP-A- 0 169 919
- DE-C- 145 517
- US-A- 3 778 209
- PATENT ABSTRACTS OF JAPAN, Band 10, Nr. 98 (C-339)[2155], 15. April 1986; & JP-A-60 227 658 (MARUDAI SHIYOKUHIN K.K.) 12-11-1985

## Beschreibung

Die Erfindung betrifft ein Verfahren zum Herstellen gefüllter Massen, bei welchem mindestens eine Füllmasse und mindestens eine Hüllmasse getrennt zugeführt und so vereinigt werden, daß die Hüllmasse die Füllmasse im wesentlichen umgibt und die vereinigten Massen nachfolgend, gegebenenfalls portioniert, abgegeben werden.

Die Erfindung betrifft weiterhin eine Vorrichtung zum Herstellen gefüllter Massen mit einer ersten Fördervorrichtung für eine Hüllmasse, einer zweiten Fördervorrichtung für eine Füllmasse, einer mit der ersten und der zweiten Fördervorrichtung verbundenen Abgabevorrichtung, die einen mit der zweiten Fördervorrichtung für Füllmasse verbundenen inneren Rohrstutzen und einen mit der ersten Fördervorrichtung für Hüllmasse verbundenen, den inneren Rohrstutzen umgebenden äußeren Rohrstutzen aufweist, wobei ein Ringspalt zwischen beiden Rohrstutzen verbleibt, weiterhin mit einer Einrichtung zur Unterbrechung der Zuführung der Füllmasse bei andauernder Zuführung der Hüllmasse, sowie gegebenenfalls mit einer Formungseinrichtung für die gefüllte Masse.

Besonders im Bereich der Lebensmitteltechnologie spielt die Herstellung gefüllter Massen eine erhebliche Rolle. Unter einer "gefüllten Masse" wird im folgenden ein aus einer Füllmasse bestehender Kern verstanden, der in eine andersartige Hüll-Masse eingebettet ist. Vorzugsweise soll diese zweite Masse die Füllmasse gleichmäßig und vollständig umhüllen. Häufig erwünscht ist dabei eine Portionierung der gefüllten Masse, bei der annähernd kugelförmige Portionen entstehen. Angesichts der äußeren Kugelform soll auch hier eine allseitig gleichmäßig starke Umhüllung der Füllmasse durch die Hüll-Masse erreicht werden. Das ist jedoch bei als kontinuierlicher Strang hergestellten gefüllten Massen besonders schwierig.

Aus der DE-OS 23 17 696 ist bereits ein Verfahren und eine Vorrichtung zum Herstellen gefüllter Massen der eingangs genannten Art bekannt. Hierbei werden die Füllmasse und die Hüll-Masse gemeinsam aus koaxialen Rohrstutzen extrudiert, deren einer den anderen umschließt. Hierbei entsteht jedoch ein Produkt, bei dem an den Trennstellen die Füllmasse bis nach außen Vortritt. Eine gleichmäßige vollständige Umhüllung der Füllmasse durch die Hüll-Masse ist nicht möglich, insbesondere lassen sich keine kugelförmigen Portionen mit gleichmäßig starker Umhüllung herstellen.

Bei der ähnlichen bekannten Vorrichtung gemäß GB-PS 12 18 256 besteht die Möglichkeit, den gefüllten Strang zu portionieren und mit entsprechend profilierten Quetschrollen in vorgegebenem Abstand zu etwa kugelförmigen Portionen abzuquetschen. Bei dieser Formung wird jedoch der Kern aus Füllmasse nicht allseitig von einer gleichmäßig dicken Schicht von Hüll-Masse umgeben. Vielmehr besteht die so erzeugte kugelförmige Portion aus einem länglichen Füllmassenkern, der an den Abquetschstellen nur von einer sehr dünnen Schicht von Hüll-Masse bedeckt ist oder sogar an die Oberfläche der Portion vortritt.

Der nächstliegende Stand der Technik ist in der US-PS 3,778,209 offenbart. Aus dieser Druckschrift ist eine Extrudiervorrichtung für Lebensmittelprodukte bekannt, mit der eine innere Füllmasse mit einer äußeren Hüllmasse umschlossen werden kann. Bei dieser Vorrichtung wird die Hüllmasse kontinuierlich gefördert, während die Füllmasse intermittierend in diese eingebracht wird. Auf diese Weise werden Endlosprodukte erzeugt, die anschließend durch eine externe Trennvorrichtung voneinander getrennt werden, und zwar sinnvollerweise immer zwischen zwei Füllmassenabschnitten. Nachteilig hierbei ist jedoch, daß im wesentlichen nur standardisierte Produkte erzeugt werden können, während zum Beispiel die Erzeugung von Produkten in Kugelform und/oder mit optisch ansprechenden Enden nicht möglich ist.

Der Erfindung liegt die Aufgabe zugrunde, ein Verfahren sowie eine Vorrichtung zur Herstellung gefüllter Massen anzugeben, mit dem/der bei relativ geringem Aufwand eine Erzeugung einer Vielzahl verschiedener Produktformen möglich ist.

Gelöst wird diese Aufgabe bei dem eingangs genannten Verfahren durch die folgenden Verfahrensschritte:
- Beginn der Förderung von Hüllmasse,
- anschließendes Öffnen eines Ventils zur Freigabe einer Füllmassenzuführung,
- gemeinsame Förderung von Füll- und Hüllmasse,
- darauffolgendes Schließen des Ventils der Füllmassenzuführung, Unterbrechen der Füllmassenförderung und
- Fortsetzung der Förderung der Hüllmasse,
- anschließendes Unterbrechen der Hüllmassenförderung und
- abschließende Verformung der Hüllmasse um das Füllmassenende herum.

Die Aufgabe wird ferner bei einer Vorrichtung der eingangs genannten Art dadurch gelöst, daß eine Einrichtung zur zeitverzögerten Unterbrechung der Förderung der Hüllmasse nach Unterbrechung der Zuführung der Füllmasse vorgesehen ist.

Eine vorteilhafte Weiterbildung des Verfahrens ist im Anspruch 2 beschrieben, während vorteilhafte Weiterbildungen der Vorrichtung in den Unteransprüchen 4 bis 12 angegeben sind.

Das erfindungsgemäße Verfahren und die Vorrichtung gestatten auf einfachste Weise die Herstellung gefüllter Massen, bei denen die äußere Hüll-Masse die innenliegende Füllmasse mit gleichmäßiger Schichtdicke einhüllt. Die Querschnittsdimensionierungen und -formen der Massen lassen sich leicht und über große Bereiche wählen.

Insbesondere bei Verwendung eines Lamellenverschlusses als Trennvorrichtung lassen sich praktisch vollständig kugelförmige Portionen erzeugen, bei denen die Schichtdicke der Hüll-Masse überall gleichmäßig ist. Durch entsprechende Steuerung der Fördervorrichtungen und durch die vorzugsweise vorgesehene Auswechselbarkeit der Rohrstutzen wird die Variationsbreite der erzeugbaren gefüllten Massen weiter vergrößert.

Für manche Anwendungszwecke kommt es auf eine besonders genaue Dosierung der Füllmasse an, beispielsweise bei Vakuumverpackungen bzw. beim Fritieren. Bei Dosierung der Füllmasse durch entsprechende Steuerung der Fördervorrichtungen kann es hier zu einem unerwünschten Nachfließen von Füllmasse kommen. Für solche Zwecke wird vorzugsweise eine Füllvorrichtung verwendet, bei der die Mündung des inneren Rohrstutzens durch ein Ventilelement verschlossen bzw. freigegeben wird. Hierbei handelt es sich vorzugsweise um einen Ventilkörper, der mittels eines im Inneren des Rohrstutzens verlaufenden Federdrahtes von einer pneumatischen Zylindervorrichtung bewegt wird. Dies ermöglicht eine besonders verzögerungsfreie und exakte Dosierung der Füllmasse ohne Gefahr unerwünschten Nachfließens.

Im folgenden werden bevorzugte Ausführungsformen der erfindungsgemäßen Vorrichtung anhand der beigefügten Zeichnungen weiter erläutert und dabei das erfindungsgemäße Verfahren, welches mit diesen Vorrichtungen durchgeführt werden kann, im einzelnen beschrieben.

Es zeigen:
- Fig. 1: eine erste Ausführungsform einer Vorrichtung zum Herstellen gefüllter Massen;
- Fig. 2: eine zweite Ausführungsform der Vorrichtung;
- Fig. 3: eine Aufsicht einer Trennvorrichtung, gemäß der Linie A-A in Figur 2; und
- Fig. 4: eine dritte Ausführungsform der Vorrichtung.

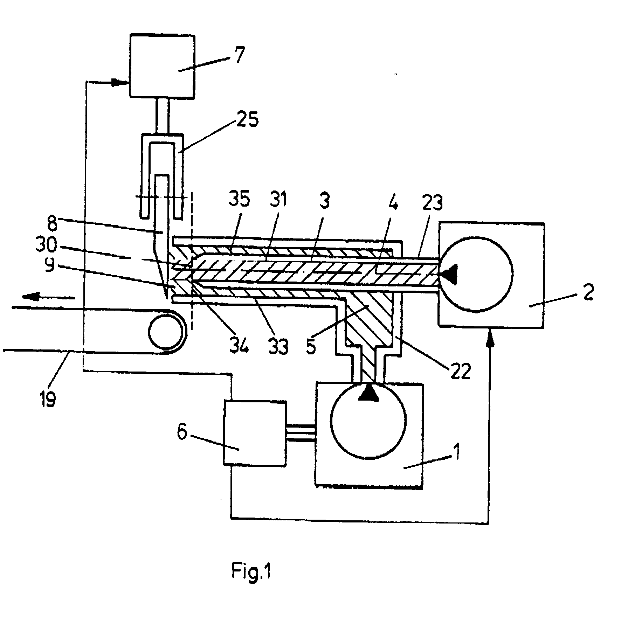

Die in Figur 1 gezeigte erste Ausführungsform der Vorrichtung weist eine Fördervorrichtung 1 auf, die eine Hüll-Masse 5 über eine Leitung 22 einem Zuführelement 3 zuführt. Die Hüll-Masse 5 ist dabei die Masse, die das herzustellende Produkt außen umgibt. Eine Füllmasse 4, also die bei dem fertigen Produkt innenliegende und von der Hüll-Masse eingehüllte Substanz, wird dem Zuführelement 3 von einer zweiten Fördervorrichtung 2 über eine zweite Leitung 23 zugeführt. Die Fördervorrichtungen können handelsübliche Füllmaschinen oder Portioniereinrichtungen sein.

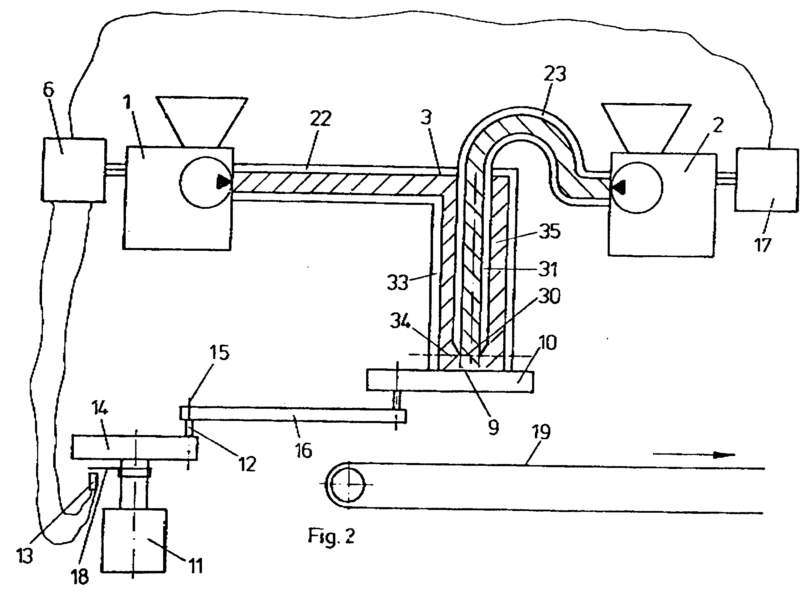

Das Zuführelement 3 besteht aus einem inneren Rohrstutzen 31, der über die Leitung 23 mit der Fördervorrichtung 2 für die Füllmasse 4 verbunden ist, und einem den inneren Rohrstutzen 31 umschließenden, äußeren Rohrstutzen 33, der über die Leitung 23 an die Fördervorrichtung 1 für die Hüll-Masse angeschlossen ist. Der innere Rohrstutzen 31 liegt koaxial und unter Bildung eines Ringspaltes 35 im äußeren Rohrstutzen 33. Füllmasse 4 wird von der Fördervorrichtung 2 durch das Innere des inneren Rohrstutzens 31 in Richtung auf dessen Mündung 30 gefördert. Hüll-Masse 5 wird von der Fördervorrichtung 1 durch den Ringspalt 35 gedrückt. An einer in den Figuren 1 und 2 jeweils gestrichelt angedeuteten Vereinigungsstelle 34 tritt die Füllmasse 4 aus der Mündung 30 des inneren Rohrstutzens aus und trifft mit der aus dem Ende des Ringspalts 35 austretenden Hüll-Masse 5 unter Bildung eines Stranges gefüllter Masse zusammen. Da die HüllMasse den Ringspalt völlig füllt, bildet sie auf ihrem Weg zu der Vereinigungsstelle 34 einen rohrartigen Strang, in dessen inneren Hohlraum die Füllmasse 4 eingeführt wird. Das freie Ende des inneren Rohrstutzens 31 ist auf seiner Außenseite in Richtung auf die Vereinigungsstelle angefast. Dadurch treffen die separat zugeführten Massen an der Vereinigungsstelle praktisch ohne verbleibenden Abstand aufeinander, und die Füllmasse füllt das Innere des Stranges vollständig aus.

Zur Anpassung der Vorrichtung an verschiedene Verhältnisse von Füllmasse 4 zu Hüll-Masse 5 ist das Zuführelement 3 so ausgebildet, daß innerer Rohrstutzen 31 und/oder äußerer Rohrstutzen 33 auswechselbar sind. Dadurch ist eine einfache Anpassung der Vorrichtung an unterschiedliche Querschnittformen sowohl der Füllung als auch des fertigen Produktes möglich.

Alternativ zu der in Figuren 1 und 2 gezeigten Ausbildung des Führungselementes 3, bei welcher die Hüll-Masse 5 der Vereinigungsstelle 34 durch den Ringspalt 35 zugeführt wird, kann auch ein Zuführele-ment verwendet werden, bei dem der Ringspalt 34 und/oder der Innenraum des inneren Rohrstutzens 31 in axial verlaufende, voneinander getrennte Sektionen unterteilt ist. Hierbei kann vorgesehen sein, daß die einzelnen Sektionen über eigene Leitungen jeweils an unterschiedliche Fördervorrichtungen angeschlossen sind.

Bei der in Figur 1 gezeigten bevorzugten Ausführungsform erstreckt sich der äußere Rohrstutzen 33 in Abgaberichtung des gefüllten Stranges über die Mündung 30 des inneren Rohrstutzens noch etwas hinaus und umschließt dadurch den von der Vereinigungsstelle 34 kommenden fertigen Strang gefüllter Masse. Der äußere Rohrstutzen 33 endet in einer Abgabeöffnung 9, aus welcher der Strang gefüllter Masse austritt.

Im Bereich der Abgabeöffnung 9 ist eine Vorrichtung vorgesehen, mittels derer der Strang gefüllter Masse in Portionen abgeteilt werden kann. Dazu dient ein senkrecht zur Abgaberichtung durch den Strang bewegbares Messer 8, das von einem Messerantrieb 7 über ein Messergestänge 25 reziprozierend antreibbar igt. Das Messer 8 wird vom Messerantrieb 7 durch den Strang bewegt, und die so gebildeten Portionen gelangen auf ein Förderband 19, welches sie abtransportiert. Der Messerantrieb 7 ist mit einer Steuerung 6 für die Fördervorrichtung 1 für Hüll-Masse verbunden, so daß die Betätigung des Messers 8 abhängig vom Vorschub der Hüll-Masse 5 erfolgt.

Mit der Steuerung 6 ist außerdem auch die Fördervorrichtung 2 für Füllmasse 4 verbunden. Dadurch ist es möglich, die Fördervorrichtung 2 für die Füllmasse in Abhängigkeit vom Betriebszustand der Fördervorrichtung 1 für Hüll-Masse zu steuern.

Bei der in Figur 1 gezeigten Ausführungsform wird beim Inbetriebsetzen der Fördervorrichtung 1 für Hüll-Masse ein Signal an die Fördervorrichtung 2 für Füllmasse abgegeben welches bewirkt, daß diese Fördervorrichtung zeitverzögert in Betrieb gesetzt wird. Der Betrieb der Fördervorrichtung 2 für Füllmasse wird nachfolgend für einen vorgewählten Zeitraum aufrechterhalten. Wenn eine vorbestimmte Portionsmenge gefördert wurde, schaltet die Steuerung 6 zunächst das Signal für die Fördervorrichtung 2 für Füllmasse ab, wodurch letztere stillgesetzt wird und dann zeitverzögert den Antrieb für die Fördervorrichtung 1 für Hüll-Masse ab. Gleichzeitig wird von der Steuerung 6 der Messerantrieb 7 in Gang gesetzt und dadurch die aus der Abgabeöffnung 9 ausgetretene Portion des gefüllten Stranges abgeteilt. Hat der Messerantrieb 7 seinen Zyklus durchlaufen, so daß das Messer 8 wieder aus dem Bereich der Abgabeöffnung 9 zurückgezogen ist, setzt die Steuerung 6 die Fördervorrichtungen 1 und 2 wieder in der beschriebenen in Gang, bis ein neuer Portionsabschnitt des gefüllten Stranges aus der Abgabeöffnung 9 ausgetreten ist.

Auf der Außenumfangsfläche des äußeren Rohrstutzens 33 kann eine schlauchförmige Umhüllung bereitgehalten werden, die in an sich bekannter Weise von dem austretenden gefüllten Strang abgezogen wird und zu dessen Verpackung dient.

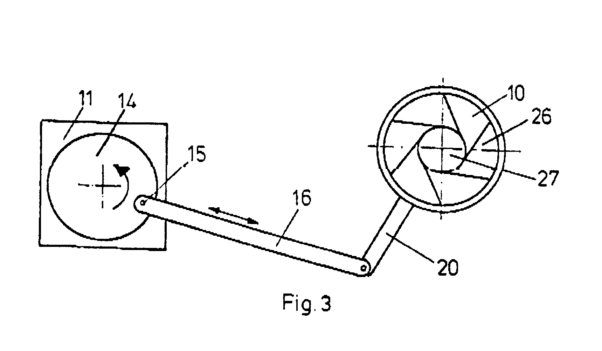

Die in Figuren 2 und 3 gezeigte, zweite Ausführungsform entspricht hinsichtlich der Fördervorrichtungen 1 und 2, der Leitungen 22, 23 und des Zuführelementes 3 der oben beschriebenen ersten Ausführungsform, so daß die entsprechenden Einzelheiten hier nicht noch einmal erläutert werden.

Unterschiede bestehen jedoch hinsichtlich der Formgebung des austretenden Stranges gefüllter Masse und hinsichtlich der dazu vorgesehenen Elemente.

Bei dieser Ausführungsform ist im Bereich der Abgabeöffnung 9 und an Stelle des Messers 8 ein Lamellenverschluß 10 angeordnet. Dieser weist in der Stirnansicht gemäß Fig. 3 mehrere lamellenartige Schneiden 26 auf, die bei Betätigung eines Stellhebels 20 unter Verengung der Durchtrittsöffnung 27 des Lamellenverschlusses 10 irisblendenartig einwärts vortreten und den durch den Lamellenverschluß 10 hindurchtretenden Strang einschnüren und durchschneiden. Dies gestattet eine sehr symmetrische Verformung des gefüllten Stranges und gibt dessen Ende eine stark angenäherte Halb-Kugelform mit gleichmäßiger Schichtdicke der Hüll-Masse. Bei entsprechender Portionsgröße lassen sich so weitestgehend kugelförmige Produkte mit gleichmäßig dicker Umhüllung erzeugen.

Die Schneiden 26 des Lamellenverschlusses 10 werden mittels des Stellhebels 20 betätigt, der zu diesem zweck reziprozierend bewegt werden muß. Dazu dient ein Antrieb 11, der eine Kurbelscheibe 14 dreht. Die Kurbelscheibe 14 ist über einen exzentrisch auf ihr angeordneten Kurbelzapfen 12 an dem in den Figuren 2 und 3 mit 15 bezeichneten Anlenkpunkt mit einer Kurbelstange 16 verbunden. Die Kurbelstange 16 ist schwenkbar am freien Ende des Stellhebels 20 angelenkt. Bei Betätigung des Antriebes 11 wird die Kurbelscheibe 14 verdreht, und die so erzeugte reziprozierende Bewegung der Kurbelstange 16 überträgt sich auf den Stellhebel 20. Der Antrieb 11 ist vorteilhaft als Verstellgetriebemotor ausgebildet; der Kurbelzapfen 12 ist auf der Kurbelscheibe 14 in seiner Exzentrizität verstellbar angeordnet, so daß sich die Bewegungsendpunkte der Schneiden 26 und damit der Öffnungsdurchmesserbereich des Lamellenverschlusses 10 verstellen lassen.

Der Antrieb 11 ist über einen Näherungsschalter 13 und ein auf der Welle des Antriebes 11 drehfestes Betätigungselement 18 mit der Steuerung 6 der Fördervorrichtung 1 für die Hüll-Masse 5 verbunden, so daß der Lamellenverschluß 10 in Abstimmung auf den Betrieb dieser Fördervorrichtung betätigt wird.

Die Steuerung 17 der Fördervorrichtung 2 für die Füllmasse erhält ein Signal von der Steuerung 6 der Fördervorrichtung 1 für Hüll-Masse. Dieses Signal wird von der Steuerung 6 zeitlich versetzt abgegeben. Das bewirkt wie bei Fig. 1 beschrieben, daß die Fördervorrichtung 2 für die Füllmasse bei jedem Portionerzyklus etwas später in Betrieb gesetzt wird als die Fördervorrichtung 1 für Hüll-Masse, so daß anfänglich ein nicht gefüllter Strangabschnitt von Hüll-Masse aus dem Ringspalt 35 in Richtung auf die Durchtrittsöffnung 27 des Lamellenverschlusses 10 vortritt.

Nachfolgend werden die Fördervorrichtungen 1 und 2 gemeinsam angetrieben und ein Abschnitt des gefüllten Stranges gebildet. Dabei tritt der nicht gefüllte Anfangsbereich des Stranges durch die sich langsam öffnende Durchtrittsöffnung 27 des Lamellenverschlusses 10. So wird zunächst der mangels Füllmasse 4 im Inneren des Stranges verbliebene Hohlraum dadurch geschlossen, daß der Strang von außen her zusammengedrückt wird. Beim Durchtritt durch die Öffnung 27 wird der Anfangsbereich des Stranges so verformt, daß die bis zum völligen zurückweichen der Schneiden 26 durch den Lamellenverschluß 10 durchgetretene erste Hälfte der Portion halbkugelförmig ist.

Wenn die Fördervorrichtung 2 für Füllmasse eine vorgegebene Füllmassenmenge abgegeben hat, die beispielsweise einem etwa kugelförmigen Kern der herzustellenden Portion entspricht, wird der Betrieb der Fördervorrichtung 2 von der Steuerung 6 durch Abschalten des Signals unterbrochen, während die Fördervorrichtung 1 für Hüll-Masse noch weiter fördert. In Umkehrung des oben beschriebenen Vorganges beginnt sich die Durchtrittsöffnung 27 des Lamellenverschlusses 10 zu verengen; die Schneiden 26 treten einwärts vor und schnüren den aus der Abgabeöffnung 9 austretenden Bereich des Stranges zu. Dadurch wird der in Abgaberichtung hintere Bereich der Portion ebenfalls halbkugelförmig geformt und der am Ende des Stranges verbliebene Hohlraum geschlossen.

Die so gebildete Portion hat praktisch Kugelform und weist eine rundum gleichmäßige Schichtdicke der Hüll-Masse auf, da die Änderung des Öffnungsdurchmessers des Lamellenverschlusses 10 zeitlich etwa sinusförmig verläuft. Durch entsprechende Justierung der Einstellmöglichkeiten und Dimensionierung der Rohrstutzen 31, 33 lassen sich kugelförmige Portionen verschiedenster Durchmesserverhältnisse von Füllmasse 4 und Hüll-Masse 5 herstellen, wobei Taktzahl und - in gewissen Grenzen - auch Mengenverhältnis und Portionsgrößen wählbar sind. Natürlich lassen sich außer kugelförmigen auch andersförmige Portionen mit dieser Vorrichtung herstellen.

Für die Herstellung gefüllter Produkt in Kugelform wird es besonders bevorzugt, daß die Kurbelscheibe 14 kontinuierlich angetrieben wird. Hierdurch wird eine optimale Kugelform erreicht. Bei dieser Betriebsweise ist es erforderlich, die Funktion des Lamellenverschlusses 10 mit den beiden Fördervorrichtungen 1, 2 zu synchronisieren. Dies geschieht bevorzugt dadurch, daß die Steuerbefehle für den geschilderten Betrieb der Fördervorrichtungen von mindestens einem Sensor abgeleitet werden, der der Trennvorrichtung, beispielsweise deren Kurbelscheibe 14 zugeordnet und von dieser betätigt ist.

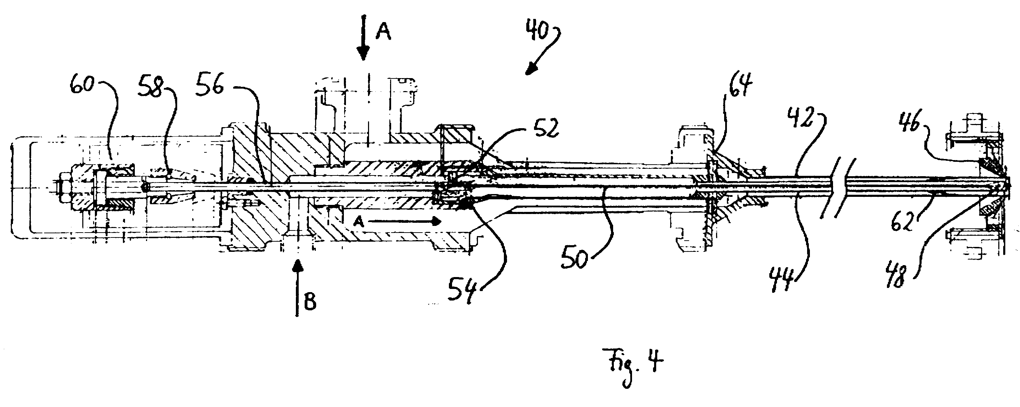

Fig. 4 zeigt eine dritte Ausführungsform der Füllvorrichtung 40, die beispielsweise zusammen mit dem soeben beschriebenen Lamellenverschluß 10 verwendet werden kann (in Fig. 4 nicht gezeigt).

Der Füllvorrichtung 40 wird Hüll-Masse (Pfeil A) und Füllmasse (Pfeil B) zugeführt; diese Massen gelangen in getrennte Kanäle im Inneren der Füllvorrichtung.

Die Füllmasse fließt durch einen inneren Rohrstutzen 44, der koaxial von einem äußeren Rohrstutzen 42 umgeben wird. Die Hüll-Masse strömt durch den Ringspalt zwischen der Innenwand des äußeren Rohrstutzens 42 und der Außenwand des inneren Rohrstutzens 44. Auf den äußeren Rohrstutzen 42 kann ein Vorrat von Verpackungsmaterial, beispielsweise Darm, aufgeschoben werden, der zusammen mit der im Mündungsbereich extrudierten gefüllten Masse abgezogen wird. Eine Bremse 46 bewirkt dabei das notwendige Straffen und Zurückhalten des Verpackungsmaterials. Die Rohrstutzen 42, 44 gehen von einer Tülle 64 aus, bis zu welcher das Verpackungsmaterial aufgeschoben werden kann. Tülle und Rohrstutzen sind gegenüber dem Rest der Vorrichtung mittels einer Drehlagerung 54 verdrehbar, so daß die fertige Portion gefüllter Masse zusammen mit dem Verpackungsmaterial abgedreht werden kann.

An der Außenwand des inneren Rohrstutzens 44 sind auf dem Umfang verteilt als Abstandshalter 62 dienende Drähte befestigt, die sich zur Innenwand des äußeren Rohrstutzens 42 hin erstrecken und für einen gleichmäßigen Ringspalt zwischen den Rohrstutzen 42, 44 sorgen.

Die Mündung des inneren Rohrstutzens 44 ist als Sitz für einen im wesentlichen tropfenförmigen Ventilkörper 48 ausgebildet, der durch einen Federdraht 50 auf diesen Ventilsitz gezogen werden kann. Der Federdraht 50 erstreckt sich etwa entlang der Längsachse des inneren Rohrstutzens 44 bis zur Drehlagerung 54 und ist dort mit einem Anschlagstift 52 fest verbunden, der die Bewegung von Federdraht 50 und Ventilkörper 48 in axialer Richtung der Füllvorichtung 40 begrenzt. Eine Kolbenstange 56 verbindet den Federdraht 50 mit einer pneumatischen Zylindervorrichtung 60, die die Bewegung des Federdrahtes 50 bewirkt. Eine in die Kolbenstange 56 eingeschaltete Kupplung 58 erleichtert die Zerlegung der Füllvorrichtung 40 zur Reinigung bzw. Wartung. Ventilkörper 48 und Federdraht 50 sind so mit der Zylindervorrichtung 60 verbunden, daß sie mit den Rohrstutzen 42, 44 verdrehbar sind.

Im Betrieb läßt man zunächst, ähnlich der bereits anhand Fig. 1 und 2 beschriebenen Vorgehensweise, so viel Hüll-Masse durch den Ringspalt zwischen den Rohrstutzen 42, 44 treten, daß die Vorderseite der zu erzeugende Portion gefüllter Masse ausgebildet werden kann. Steht die Hüll-Masse in der gewünschten gleichmäßigen Dicke an, wird die pneumatische Zylindervorrichtung 60 betätigt. Die Kolbenstange 56, der Federdraht 50 und der Ventilkörper 48 bewegen sich in Extrusionsrichtung, so daß die Mündung des inneren Rohrstutzens 44 freigegeben wird und Füllmasse austreten kann. Die ggf. benötigte Menge Hüll-Masse wird dabei koextrudiert. Ist die gewünschte Menge Füllmasse ausgetreten, wird die pneumatische Zylindervorrichtung 60 im Gegensinn betätigt und zieht über die Kolbenstange 56 und den Federdraht 50 den Ventilkörper 48 zurück gegen die Mündung des inneren Rohrstutzens 44. Jetzt kann noch soviel Hüll-Masse extrudiert werden, daß auch das hintere Ende der Portion ausgebildet werden kann.

Bei diesem Betrieb wird gleichzeitig Verpackungsmaterial von der Außenseite des äußeren Rohrstutzens 42 abgezogen. Nach beendigter Portionierung und Formung wird durch Drehung der Rohrstutzen 42, 44 das Verpackungsmaterial abgedreht und nach Verschließen durchtrennt.

## Patentansprüche

1. Verfahren zum Herstellen gefüllter Massen, bei welchem mindestens eine Füllmasse und mindestens eine Hüllmasse getrennt zugeführt und so vereinigt werden, daß die Hüllmasse die Füllmasse im wesentlichen umgibt und die vereinigten Massen nachfolgend, gegebenenfalls portioniert abgegeben werden,
gekennzeichnet durch die folgenden Verfahrensschritte:
- Beginn der Förderung von Hüllmasse,
- anschließendes Öffnen eines Ventils zur Freigabe einer Füllmassenzuführung,
- gemeinsame Förderung von Füll- und Hüllmasse,
- darauffolgendes Schließen des Ventils der Füllmassenzuführung, Unterbrechen der Füllmassenförderung und
- Fortsetzung der Förderung der Hüllmasse,
- anschließendes Unterbrechen der Hüllmassenförderung und
- abschließende Verformung der Hüllmasse um das Füllmassenende herum.

2. Verfahren nach Anspruch 1,
dadurch gekennzeichnet, daß der zunächst geförderte Hüllmassenabschnitt in Förderrichtung hinter einer Vereinigungsstelle beider Massen geschlossen und kugelsegmentartig geformt wird, und daß nach gemeinsamer Förderung von Hüll- und Füllmasse der abschließend geförderte Hüllmassenabschnitt geschlossen und kugelsegmentartig geformt wird.

3. Vorrichtung zum Herstellen gefüllter Massen mit
- einer ersten Fördervorrichtung (1) für eine Hüllmasse (5),
- einer zweiten Fördervorrichtung (2) für eine Füllmasse (4),
- einer mit der ersten und der zweiten Fördervorrichtung verbundenen Abgabevorrichtung, die einen mit der zweiten Fördervorrichtung (2) für Füllmasse (4) verbundenen inneren Rohrstutzen (31, 44) und einen mit der ersten Fördervorrichtung (1) für Hüllmasse (5) verbundenen, den inneren Rohrstutzen umgebenden äußeren Rohrstutzen (33, 42) aufweist, wobei ein Ringspalt (35) zwischen beiden Rohrstutzen verbleibt,
- einer Einrichtung zur Unterbrechung der Zuführung der Füllmasse (4) bei andauernder Zuführung der Hüllmasse (5), und ggf.
- einer Formungseinrichtung für die gefüllte Masse,
gekennzeichnet durch
- eine Einrichtung (6, 48) zur zeitverzögerten Unterbrechung der Förderung der Hüllmasse (5) nach Unterbrechung der Zuführung der Füllmasse (4).

4. Vorrichtung nach Anspruch 3,
dadurch gekennzeichnet, daß ein Ventil mit einem Ventilkörper (48) vorgesehen ist, der von außen auf die Mündung des inneren Rohrstutzens (31, 44) aufsetzbar ist und diese wahlweise verschließt oder freigibt.

5. Vorrichtung nach Anspruch 4,
dadurch gekennzeichnet, daß der Ventilkörper (48) durch einen sich durch den inneren Rohrstutzen (31, 44) erstreckenden Draht oder Stab (50) betätigbar ist.

6. Vorrichtung nach Anspruch 4 oder 5,
dadurch gekennzeichnet, daß der Ventilkörper (48) durch eine Pneumatikvorrichtung (60) betätigbar ist.

7. Vorrichtung nach mindestens einem der Ansprüche 3 bis 6,
gekennzeichnet durch eine Trennvorrichtung, die in Förderrichtung gesehen im Bereich hinter der Abgabevorrichtung angeordnet ist, zum ggf. portionierenden Abtrennen der gefüllten Masse dient und mindestens ein im wesentlichen senkrecht zur Abgaberichtung durch die gefüllte Masse bewegbares Messer (8) aufweist.

8. Vorrichtung nach mindestens einem der Ansprüche 3 bis 7,
gekennzeichnet durch mindestens eine Steuereinrichtung zur Steuerung der Zufuhr der Füllmasse (4) und der Hüllmasse (5) zu der Abgabevorrichtung in der Weise, daß für eine vorbestimmte Zeitdauer zunächst nur Hüllmasse und dann zusätzlich Füllmasse gefördert wird, daß nach einer weiteren vorbestimmten Zeitdauer zunächst die Förderung von Füllmasse und danach die Förderung von Hüllmasse unterbrochen wird.

9. Vorrichtung nach mindestens einem der Ansprüche 6 bis 8,
gekennzeichnet durch eine Steuereinheit zur Auslösung der Trennvorrichtung bei der Unterbrechung der Zufuhr der Hüllmasse.

10. Vorrichtung nach mindestens einem der vorhergehenden Ansprüche,
dadurch gekennzeichnet, daß der Ventilkörper im wesentlichen tropfenförmig ausgebildet ist.

11. Vorrichtung nach mindestens einem der Ansprüche 3 bis 10,
dadurch gekennzeichnet, daß die Rohrstutzen (31, 33; 42, 44) im Betrieb gemeinsam verdrehbar sind.

12. Vorrichtung nach mindestens einem der Ansprüche 3 bis 11,
dadurch gekennzeichnet, daß zwischen dem inneren und dem äußeren Rohrstutzen (42, 44) Abstandshalter (62) vorgesehen sind.

## Claims

1. A process for preparing stuffed products, in which at least one filling and at least one covering are supplied separately and are combined so that the covering substantially surrounds the filling and the combined products are subsequently delivered, in the appropriate circumstances in portions,
**characterised by** the following process steps:
- start of the conveyance of the covering,
- subsequent opening of a valve to trigger a supply of filling,
- joint conveyance of filling and covering,
- subsequent closing of the valve for the supply of filling, interruption in the conveyance of filling and
- continuation of conveyance of the covering,
- subsequent interruption in the conveyance of the covering and
- final shaping of the covering around the end of the filling.

2. A process according to Claim 1,
**characterised in that** the first covering portion conveyed is closed in the direction of transport behind an assembly point for both products and formed like spherical segments, and in that after the combined conveyance of covering and filling the final covering portion conveyed is closed and formed like spherical segments.

3. Apparatus for producing filled products having
- a first conveyor (1) for a covering (5),
- a second conveyor (2) for a filling (4),
- a delivery device connected to the first and second conveyor, which comprises an inner connecting sleeve (31, 44) connected to the second conveyor (2) for filling (4) and an outer connecting sleeve (33, 42) connected to the first conveyor (1) for covering (5) and surrounding the inner connecting sleeve, whereby a annular gap (35) remains between two connecting sleeves,
- a mechanism for interrupting the supply of filling (4) with the continuing supply of covering (5), and in the appropriate circumstances
- a shaping mechanism for the filled product,
**characterised by**
- a mechanism (6, 48) for the time-delayed interruption in the supply of the covering (5) after the interruption in the supply of the filling (4).

4. Apparatus according to Claim 3,
**characterised in that** a valve is provided with a valve body (48), which can be placed from outside onto the outlet of the inner connecting sleeve (31, 44) and selectively closes or frees it.

5. Apparatus according to Claim 4,
**characterised in that** the valve body (48) can be operated by a wire or bar (50) extending through the inner connecting sleeve (31, 44).

6. Apparatus according to Claim 4 or 5,
**characterised in that** the valve body (48) can be operated by a pneumatic device (60).

7. Apparatus according to at least one of Claims 3 to 6,
**characterised by** a separating device, which, seen in the direction of transport, is disposed in the region behind the delivery device, is used in the appropriate circumstances for the separation of filling into portions and comprises at least one knife (8) which can move through the filling substantially perpendicular to the delivery direction .

8. Apparatus according to at least one of Claims 3 to 7,
**characterised by** at least one control mechanism for controlling the supply of filling (4) and covering (5) to the delivery device so that for a predetermined period of time at first only the covering and then in addition the filling is transported, and after a further predetermined period of time firstly the conveyance of filling and subsequently the conveyance of covering is interrupted.

9. Apparatus according to at least one of Claims 6 to 8,
**characterised by** a control unit to trigger the separating device during the interruption of the supply of covering.

10. Apparatus according to at least one of the preceding Claims,
**characterised in that** the valve body has a substantially streamlined construction.

11. Apparatus according to at least one of Claims 3 to 10,
**characterised in that** the connecting sleeves (31, 33; 42, 44) can be rotated together during operation.

12. Apparatus according to at least one of Claims 3 to 11,
**characterised in that** between the inner and the outer connecting sleeves (42, 44) are provided spacers (62).

## Revendications

1. Procédé de préparation de produits fourrés, dans lequel on amène séparément au moins une matière de remplissage et au moins une matière d'enrobage et on les réunit de manière que la matière d'enrobage entoure essentiellement la matière de remplissage, et on débite ensuite les matières réunies, le cas échéant sous forme de portions, caractérisé par les étapes de procédé suivantes :
- début du refoulement de la matière d'enrobage,
- ouverture subséquente d'une soupape pour libérer l'amenée de matière de remplissage,
- refoulement commun de la matière de remplissage et de la matière d'enrobage,
- fermeture subséquente de la soupape d'amenée de matière de remplissage, arrêt du refoulement de la matière de remplissage et
- poursuite du refoulement de la matière d'enrobage,
- arrêt subséquent du refoulement de la matière d'enrobage,
- façonnage final de la matière d'enrobage autour de la matière de remplissage.

2. Procédé selon la revendication 1, caractérisé en ce que le tronçon de matière d'enrobage refoulé en premier lieu est fermé, dans le sens du refoulement, en arrière d'une zone de réunion des deux matières et est façonné en forme de segment sphérique, et en ce qu'après le refoulement commun de la matière d'enrobage et de la matière de remplissage, le tronçon de matière d'enrobage refoulé en dernier lieu est fermé et façonné en forme de segment sphérique.

3. Installation de préparation de produits fourrés, comportant :
- un premier appareil de refoulement (1) pour une matière d'enrobage (5),
- un deuxième appareil de refoulement (2) pour une matière de remplissage (4),
- un dispositif distributeur relié au premier appareil et au deuxième appareil de refoulement, présentant une tubulure intérieure (31,44) reliée au deuxième appareil de refoulement (2) de matière de remplissage (4) et une tubulure de extérieure (33,42) reliée au premier appareil de refoulement (1) de matière d'enrobage (5) et entourant la tubulure intérieure, un intervalle annulaire (35) subsistant entre les deux tubulures,
- un dispositif pour arrêter l'amenée de matière de remplissage (4) tandis que l'amenée de la matière d'enrobage (5) continue et, le cas échéant,
- un dispositif de façonnage du produit fourré caractérisé par
- un dispositif (6,48) pour l'arrêt retardé de l'amenée de la matière d'enrobage (5) après arrêt de l'amenée de la matière de remplissage (4).

4. Installation selon la revendication 3, caractérisée en ce qu'il est prévu une soupape munie d'un obturateur (48) pouvant être appliqué de l'extérieur sur l'embouchure de la tubulure intérieure (31,44) en fermant ou ouvrant sélectivement celle-ci.

5. Installation selon la revendication 4, caractérisée en ce que l'obturateur (48) est commandé par un fil ou une barre (50) s'étendant à l'intérieur de la tubulure intérieure (31,44).

6. Installation selon la revendication 4 ou la revendication 5, caractérisée en ce que l'obturateur (48) est commandé par un dispositif pneumatique (60).

7. Installation selon au moins l'une des revendications 3 à 6, caractérisée par un dispositif de cisaillement disposé, en se référant au sens du refoulement, dans la zone située en arrière du dispositif distributeur et servant à fractionner le produit fourré, le cas échéant en portions, ce dispositif de cisaillement comportant au moins une lame (8) pouvant être déplacée à travers le produit fourré de façon sensiblement perpendiculaire au sens de distribution.

8. Installation selon au moins l'une des revendications 3 à 7, caractérisée par au moins un dispositif de commande pour commander l'amenée de la matière de remplissage (4) et de la matière d'enrobage (5) vers le dispositif distributeur, de manière que, pendant une durée prédéterminée, seule la matière d'enrobage soit d'abord refoulée, la matière de remplissage étant ensuite refoulée en plus, qu'après une autre durée prédéterminée, le refoulement de la matière de remplissage soit d'abord arrêté, le refoulement de la matière d'enrobage étant arrêté ensuite.

9. Installation selon au moins l'une des revendications 6 à 8, caractérisée par une unité de commande pour déclencher le dispositif de cisaillement lors de l'arrêt de l'amenée de la matière d'enrobage.

10. Installation selon au moins l'une des revendications précédentes, caractérisée en ce que l'obturateur est essentiellement constitué en forme de goutte.

11. Installation selon au moins l'une des revendications 3 à 10, caractérisée en ce que les tubulures (31,33 ; 42,44) peuvent tourner conjointement lors du fonctionnement.

12. Installation selon au moins l'une des revendications 3 à 11, caractérisée en ce que des entretoises (62) sont disposées entre les tubulures intérieures et extérieures (42,44).
